# EUROPEAN PATENT SPECIFICATION

(11) **EP 2 829 770 B1**
(45) Date of publication and mention of the grant of the patent: **27.03.2019**
(21) Application number: 14174007.6
(22) Date of filing: 25.06.2014
(51) Int. Cl.: F04B 35/04, F04B 39/14, F04B 39/12, F16H 57/02

(54) **Air compressor having compact structure**
Luftkompressor mit kompakter Struktur
Compresseur d'air ayant une structure compacte

(30) Priority: 22.07.2013 TW 102126174
(43) Date of publication of application: 28.01.2015
(73) Proprietor: Jhou, Wen-San, An-Din Dist. Tainan City (TW)
(72) Inventor: Jhou, Wen-San, An-Din Dist. Tainan City (TW)
(74) Representative: Lang, Christian

(56) References cited:
- US-A- 4 706 937
- US-A1- 2003 024 348
- US-A1- 2003 140 729
- US-A1- 2004 141 855
- US-A1- 2005 063 840

## Description

### BACKGROUND OF THE INVENTION

### 1. Field of the Invention

The present invention relates to an air compressor device, and more particularly to an air compressor device including a compact structure or configuration having a relatively decreased or reduced size or volume or dimension or standard for facilitating the storing and transportation purposes or function or effect for the air compressor device.

### 2. Description of the Prior Art

Typical air compressors comprise a cylinder housing attached or secured to a base and having a piston slidably disposed therein, and a motor secured to the base and coupled to the piston of the cylinder housing for actuating or driving the piston of the cylinder housing in a reciprocating action, in order to generate a pressurized air of a greater air pressure and a decreased flowing quantity and for supplying the pressurized air to inflate various air facilities, such as tires, air beds, air cushions, hovercrafts, etc.

The cylinder housing normally includes an outlet receptacle 50 having a compartment formed therein and having one or more outlet ports communicative with the compartment of the outlet receptacle 50 for selectively or changeably attaching and securing or coupling various parts or elements or attachments or facilities, such as the pressure gauges, the air nozzles, the relief valves, the safety valves or the like.

The applicant has developed various kinds of typical air compressors, including at least U.S. Patent No. 6,213,725 to Chou, U.S. Patent No. 6,514,058 to Chou, U.S. Patent No. 6,655,928 to Chou, U.S. Patent No. 6,846,162 to Chou, U.S. Patent No. 7,240,642 to Chou, and U.S. Patent No. 7,462,018 to Chou each of which also comprise a piston slidably disposed within a cylinder housing, a spring valve having one end secured to the piston and having the other end for selectively blocking an air aperture of the piston, in order to control the air to flow through the piston, and a motor secured to the base and coupled to the piston of the cylinder housing with a gearing mechanism for actuating or driving or forcing the piston of the cylinder housing to move in the reciprocating action relative to the cylinder housing, and an outlet receptacle extended or formed on top of the cylinder housing and having a compartment formed therein for receiving the pressurized air from the cylinder housing and having one or more outlet ports communicative with the compartment of the outlet receptacle for selectively or changeably attaching and securing or coupling various parts or elements or attachments or facilities, such as the pressure gauges, the air nozzles, the relief valves, the safety valves or the like.

However, the attachment or engagement of the motor to the supporting base and/or the cylinder housing, or the supporting base may require a greatly or relatively increased size or volume or dimension or standard, or the supporting base is required to include a greatly or relatively increased size or volume or dimension or standard that is adverse for storing and transportation purposes and that may greatly increase the manufacturing fee for the air compressors.

US 2004/0141855A1 discloses an air compressor device according to the preamble of claim 1 comprising a machine base connected to a motor seat, wherein a motor can be seated. When mounting the motor, a shaft is stuck trough a shaft hole. A transmission gear is then fixed which would not get through the shaft hole, and which engages with a subordinated gear for driving a piston rod in reciprocating manner.

US 2003/0024348A1 discloses a method to fix a motor to a motor gear box, wherein the motor gear box includes an opening having teeth through which a gear fixed at the end of the motor shaft can be stuck trough, and wherein a protrusion on the motor can then be fixed within the teeth once the gear has got through the opening.

The primary objective of the present invention is to mitigate and/or obviate the afore-described disadvantages of the conventional structures for the air compressors.

### SUMMARY OF THE INVENTION

This objective is achieved by the invention with an air compressor device as defined in claim 1.

In accordance with one aspect of the invention, there is provided an air compressor device comprising a supporting base including a supporting plate and a cylinder housing, the cylinder housing including a chamber formed therein, and including an outlet receptacle extended upwardly from the cylinder housing for receiving a pressurized air from the chamber of the cylinder housing, the supporting plate including an orifice and an aperture 13 formed therein, a piston slidably received or engaged in the chamber of the cylinder housing and having a piston rod extended from a piston head, a shaft rotatably engaged through the aperture of the supporting plate, a gear attached to the shaft and rotatable relative to the supporting plate, an eccentric member attached to the gear and including an eccentric pin extended from the eccentric member and coupled to the piston rod in order to actuate and move the piston head of the piston relative to the cylinder housing in a reciprocating action, and a motor including a forwardly extended protrusion engaged into the orifice of the supporting plate, and including a spindle rotatably extended out of the protrusion and extended
through the orifice of the supporting plate, and including a pinion attached to the spindle and meshed and engaged with the gear for allowing the gear to be driven by the motor with the pinion, and for allowing the piston head and the piston rod to be moved relative to the cylinder housing in the reciprocating action by the eccentric member and the eccentric pin, and the pinion including an outer diameter (D) greater than an outer diameter (d) of the protrusion of the motor.

The supporting plate includes a plurality of teeth extended radially and inwardly into the orifice of the supporting plate for forming a plurality of slots between the teeth, the teeth of the supporting plate include a dedendum having an inner diameter (W) no less than the outer diameter (D) of the pinion of the motor for allowing the pinion of the motor to be engaged through the orifice of the supporting plate.

The protrusion of the motor includes an outer diameter (d) no greater than an inner diameter (a) of an addendum of the teeth of the supporting plate for allowing the protrusion of the motor to be engaged into the orifice of the supporting plate and to be snugly fitted or engaged with the addendum of the teeth of the supporting plate.

The motor includes a mounting seat on its outer diameter at its forward end. The supporting plate includes a protrusion placed on the mounting seat.

The motor preferably includes at least one retaining hole formed therein, and the supporting plate includes at least one positioning projection extended outwardly therefrom and located beside the orifice of the supporting plate and engaged into the retaining hole of the motor for solidly and stably anchoring the motor to the supporting plate and for preventing the motor from being pivoted or rotated relative to the supporting plate.

The supporting plate preferably includes at least one engaging hole engaged with a fastener which is engaged with the motor for solidly and stably anchoring or retaining or attaching or mounting or securing or positioning the motor to the supporting plate.

Further objectives and advantages of the present invention will become apparent from a careful reading of the detailed description provided hereinbelow, with appropriate reference to the accompanying drawings.

### BRIEF DESCRIPTION OF THE DRAWINGS

FIG. 1 is a partial exploded view of an air compressor device in accordance with the present invention;
FIG. 2 is a perspective view of the air compressor device;
FIG. 3 is a partial cross sectional view of the air compressor device, taken along lines 3-3 of FIG. 2;
FIG. 4 is another perspective view similar to FIG. 2, in which some of the parts or elements of the air compressor device have been removed or deleted for showing the inner structure of the air compressor device;
FIG. 5 is a perspective view illustrating the motor of the air compressor device;
FIG. 6 is a side plan schematic view of the motor of the air compressor device; and
FIG. 7 is an enlarged partial plan schematic view illustrating the supporting base of the air compressor device.

### DETAILED DESCRIPTION OF THE PREFERRED EMBODIMENT

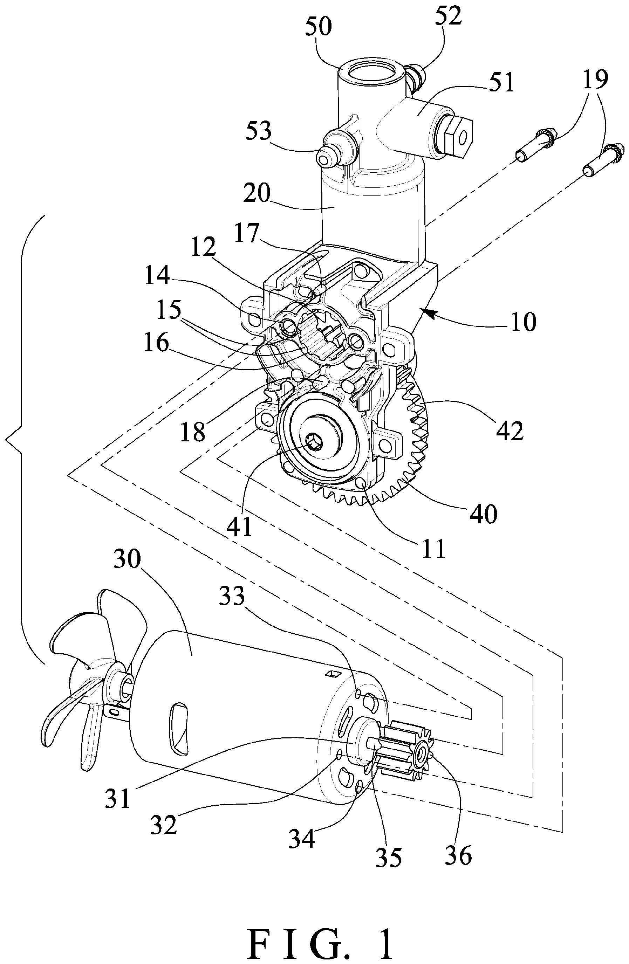

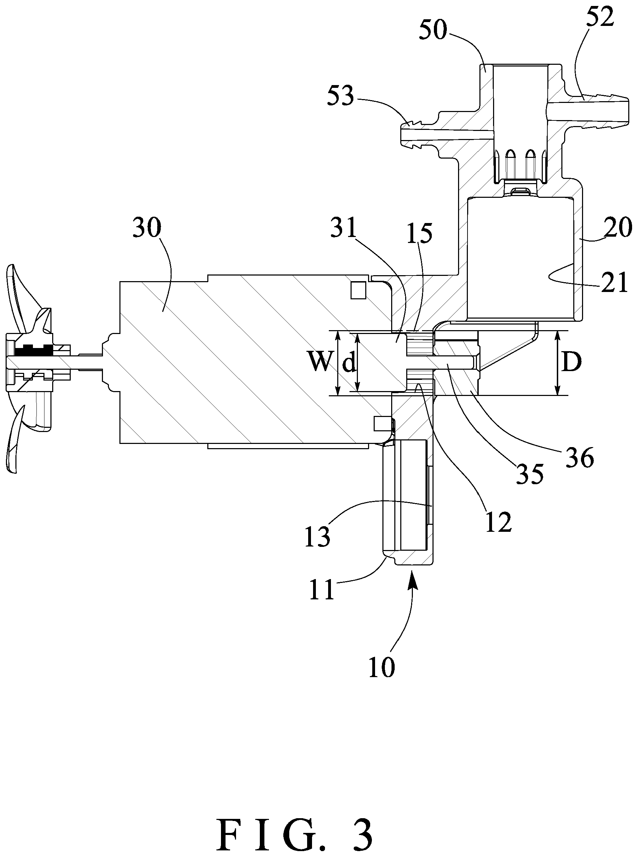

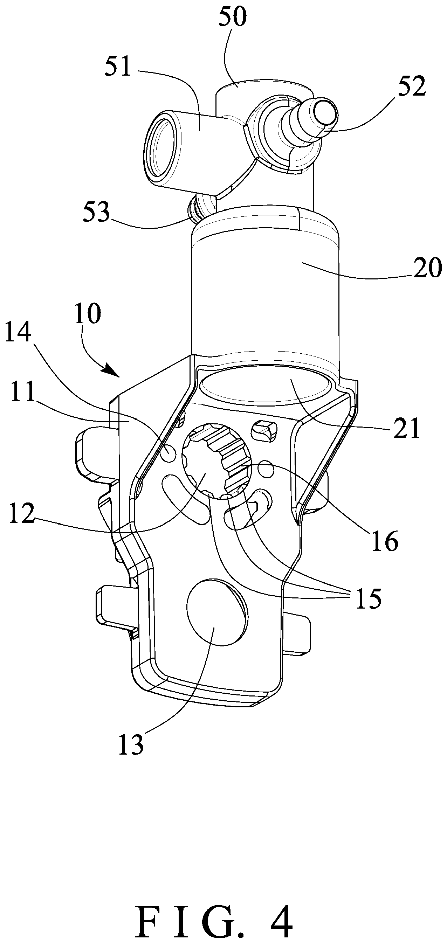

Referring to the drawings, and initially to FIGS. 1-4, an air compressor device in accordance with the present invention comprises a supporting base 10 including a supporting plate 11 and a cylinder housing 20 provided on or extended from the supporting plate 11 and preferably, but not necessarily formed integral with the supporting plate 11. For example, the supporting plate 11 and the cylinder housing 20 may be formed integral with each other, as shown in FIGS. 3 and 4, with the molding or mold-injection processes, for example, or alternatively, the cylinder housing 20 may include one or more projections (not shown) extended therefrom and engaged with corresponding hubs or tubular members (not shown) of the supporting plate 11 for detachably attaching or mounting or securing the cylinder housing 20 to the supporting plate 11.

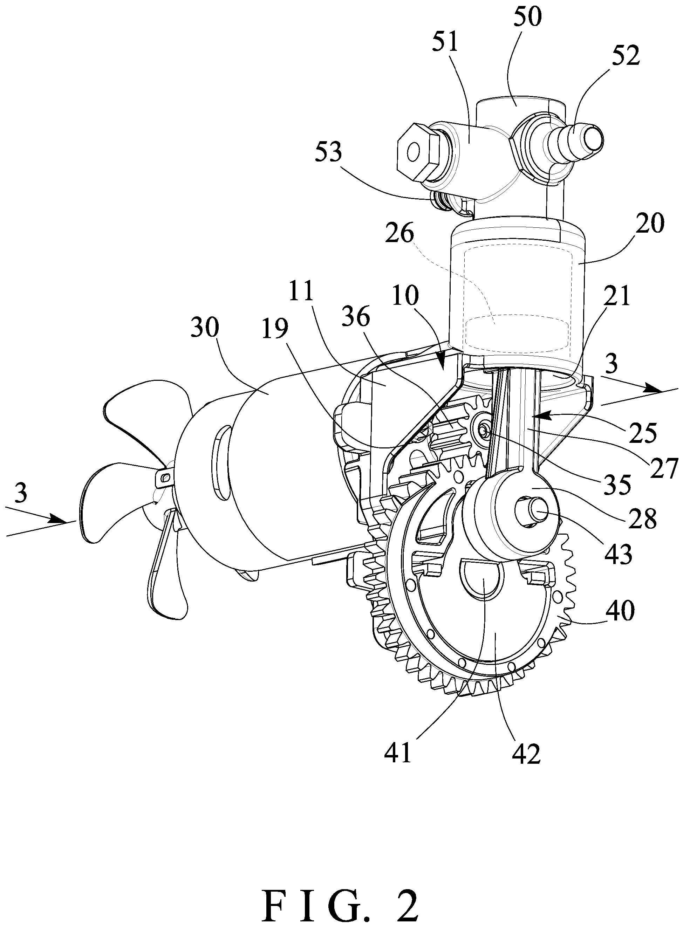

The cylinder housing 20 includes a chamber 21 formed therein and formed or defined by an inner peripheral surface and opened downwardly for slidably receiving or engaging with a piston 25 therein (FIG. 2), the piston 25 includes an extension or piston rod 27 extended from a piston head 26 and is slidable in a reciprocating action in the chamber 21 of the cylinder housing 20 for generating a pressurized air. As best shown in FIG. 4, the supporting plate 11 includes an orifice 12 and an aperture 13 formed therein, and one located above the other, for example, the orifice 12 is located above the aperture 13 of the supporting plate 11, and one or more (such as two) anchoring or engaging holes 14 are also formed in the supporting plate 11 and disposed or located around or beside the orifice 12 of the supporting plate 11 for receiving or engaging with latches or pins or catches or fasteners 19.

The supporting plate 11 further includes an internal gear or a number of teeth 15 extended radially and inwardly into the orifice 12 of the supporting plate 11 for forming or defining a number of gaps or spaces or slots 16 between the teeth 15, in which the slots 16 and/or the teeth 15 of the supporting plate 11 are disposed or extended or arranged substantially perpendicular to the two surfaces of the supporting plate 11 linked via the orifice (12). The supporting plate 11 further includes one or more (such as two) anchoring or engaging or retaining or latching or catching or positioning members 17, 18, such as keys or pegs or projections 17, 18 (FIG. 1) formed or provided therein, and preferably, but not necessary that the positioning members or projections 17, 18 are disposed or located around or beside the orifice 12 of the supporting plate 11, for example, the projection 17 is located above the other projection 18.

As shown in FIGS. 1-3 and 5-6, a motor 30 may be attached or secured to the upper portion of the supporting plate 11 with such as latches or pins or catches or fasteners 19, and includes a swelling or bulge or protrusion 31 extended forwardly therefrom for engaging into or with the orifice 12 of the supporting plate 11 and for attaching or mounting or securing or coupling to the supporting plate 11, and includes one or more (such as two) anchoring or engaging or retaining or latching or positioning holes 32 formed therein and disposed or located around or beside the protrusion 31 for receiving or engaging with the latches or pins or catches or fasteners 19 and for solidly and stably anchoring or retaining or attaching or mounting or securing or positioning the motor 30 to the supporting plate 11.

The motor 30 further includes one or more (such as two) anchoring or engaging or positioning or latching or retaining holes 33, 34 formed therein and one located above the other, for example, the retaining hole 33 is located above the other retaining hole 34 of the motor 30 for receiving or engaging with the projections 17, 18 of the supporting plate 11 respectively and for further solidly and stably anchoring or retaining or attaching or mounting or securing or positioning the motor 30 to the supporting plate 11. The motor 30 further includes a spindle 35 (FIGS. 1-3 and 5-6) pivotally or rotatably extended out of the protrusion 31 and extended through the orifice 12 of the supporting plate 11, and includes a pinion 36 attached or mounted or secured to the spindle 35 thereof for coupling to and for moving or driving the piston 25 relative to the cylinder housing 20.

A gear 40 is rotatably attached to the lower portion of the supporting plate 11 with one or more bearings (not shown) and a shaft 41 (FIGS. 1, 2) which is pivotally or rotatably engaged through the aperture 13 of the supporting plate 11, and an eccentric member 42 is attached or secured to the gear 40 with such as fasteners (not shown) or with the molding or mold-injection processes and may thus be rotated in concert with the gear 40, and includes a crank or an eccentric pin 43 extended therefrom and coupled to the free end portion 28 of the piston rod 27 of the piston 25 (FIG. 2) in order to actuate or to move the piston 25 relative to the cylinder housing 20, or to actuate or to move the piston head 26 along the cylinder housing 20 in the reciprocating actions.

As also shown in FIG. 2, the pinion 36 of the motor 30 is meshed or engaged with the gear 40 for allowing the gear 40 to be pivoted or rotated or driven by the motor 30 with the pinion 36, and thus for allowing the piston head 26 of the piston 25 to be actuated to move along or relative to the cylinder housing 20 in reciprocating actions by the eccentric member 42 and the eccentric pin 43. The cylinder housing 20 includes an outlet tube or barrel or receptacle 50 extended upwardly or outwardly from the top of the cylinder housing 20 for receiving the pressurized air from the chamber 21 of the cylinder housing 20, and the outlet receptacle 50 further includes one or more ducts 51, 52, 53 (FIGS. 1-4) extended outwardly therefrom and communicative with the outlet receptacle 50, for receiving the pressurized air from the outlet receptacle 50.

The ducts 51, 52, 53 may be coupled to various kinds of facilities that require pressurized air supplied thereto, such as nozzle (not shown), hose (not shown), pressure gauge (not shown), cap or lid (not shown), spring-biased check valve (not shown), relief valve (not shown), safety valve (not shown), or the like, in which the above-described structure or configuration for the air compressor device, including the nozzle and the hose for coupling to the facilities that require pressurized air supplied thereto, the pressure gauge, the cap or lid, the spring-biased check valve, the relief valve, the safety valve or the like is typical and is not related to the present invention and will not be described in further details.

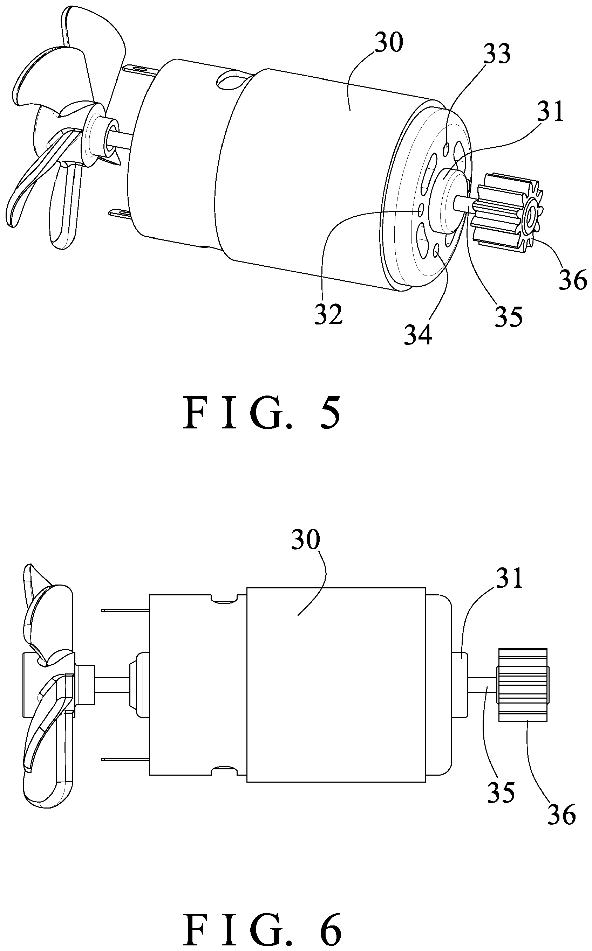

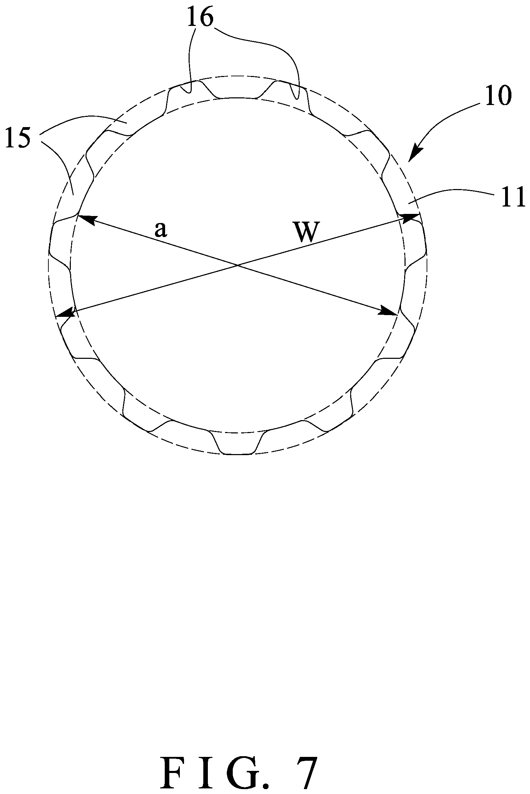

As shown in FIG. 7, the inner diameter (a) of the addendum or the teeth 15 of the supporting plate 11 is defined as (a), and the diameter, or the inner diameter (W) of the orifice 12 or of the dedendum or the root portion of the teeth 15 of the supporting plate 11 is defined as (W), and as shown in FIGS. 3, 6, the outer diameter (D) of the pinion 36 of the motor 30 is equal to or slightly smaller than, or no greater than the inner diameter (W) of the dedendum or the root portion of the teeth 15 of the supporting plate 11 for allowing the pinion 36 of the motor 30 to be engaged into or through the orifice 12 of the supporting plate 11, and the outer diameter (d) of the protrusion 31 of the motor 30 is equal to or slightly smaller than, or no greater than the inner diameter (a) of the addendum or the teeth 15 of the supporting plate 11 for allowing the protrusion 31 of the motor 30 to be engaged into the orifice 12 of the supporting plate 11 and contacted or engaged with the addendum or the teeth 15 of the supporting plate 11, and thus for allowing the protrusion 31 and/or the motor 30 to be solidly and stably attached or mounted or secured to the supporting plate 11.

In operation, as shown in FIG. 2, the piston head 26 of the piston 25 may be actuated or moved relative to the cylinder housing 20 in the reciprocating actions by the motor 30 with the pinion 36, the gear 40, the eccentric member 42 and the eccentric pin 43, in order to generate a pressurized air, and to allow the pressurized air to flow into the outlet receptacle 50, and then to flow out through either or all of the ducts 51, 52, 53, and to allow the air pressure within the cylinder housing 20 and/or the outlet receptacle 50 to be detected and shown by the pressure gauge (not shown), and to allow the pressurized air to be supplied into the facilities that require pressurized air supplied thereto, with the nozzle, and/or to allow the pressurized air to be relieved via the relief valve (not shown) when the cylinder housing 20 and/or the outlet receptacle 50 is over-pressurized.

As shown in FIG. 3, the outer diameter (D) of the pinion 36 of the motor 30 which is equal to or slightly smaller than, or no greater than the inner diameter (W) of the dedendum or the root portion of the teeth 15 of the supporting plate 11 may be engaged into or through the orifice 12 of the supporting plate 11, and the outer diameter (d) of the protrusion 31 of the motor 30 which is equal to or slightly smaller than, or no greater than the inner diameter (a) of the addendum or the teeth 15 of the supporting plate 11 may be engaged into the orifice 12 of the supporting plate 11 and snugly contacted or engaged with the addendum or the teeth 15 of the supporting plate 11, and thus for allowing the protrusion 31 and/or the motor 30 to be solidly and stably attached or mounted or secured to the supporting plate 11 without vibration, and thus for allowing the working life of the air compressor device to be suitably increased.

Accordingly, the air compressor device in accordance with the present invention includes a compact structure or configuration having a relatively decreased or reduced size or volume or dimension or standard for facilitating the storing and transportation purposes or effect for the air compressor device.

## Claims

1. An air compressor device comprising:
a supporting base (10) including a supporting plate (11) and a cylinder housing (20), said cylinder housing (20) including a chamber (21) formed therein, and including an outlet receptacle (50) extended upwardly from said cylinder housing (20) for receiving a pressurized air from said chamber (21) of said cylinder housing (20),
said supporting plate (11) including an orifice (12) and an aperture (13) formed therein,
a piston (25) slidably received in said chamber (21) of said cylinder housing (20) and having a piston rod (27) extended from a piston head (26),
a shaft rotatably engaged through said aperture (13) of said supporting plate (11),
a gear (40) attached to said shaft (41) and rotatable relative to said supporting plate (11),
an eccentric member (42) attached to said gear (40) and including an eccentric pin (43) extended from said eccentric member (42) and coupled to said piston rod (27) in order to actuate and move said piston head (26) of said piston relative to said cylinder housing (20) in a reciprocating action,
a motor (30) including a forwardly extended protrusion (31) engaged into said orifice of said supporting plate (11), and including a spindle rotatably extended out of said protrusion (31) and extended through said orifice of said supporting plate (11), and including a pinion (36) attached to said spindle (35) and meshed and engaged with said gear (40) for allowing said gear (40) to be driven by said motor (30) with said pinion (36), and for allowing said piston head (26) and said piston rod (27) to be moved relative to said cylinder housing (20) in the reciprocating action by said eccentric member (42) and said eccentric pin (43), and said pinion (36) including an outer diameter (D) greater than an outer diameter (d) of said protrusion (31) of said motor (30), **characterized in that**
said supporting plate (11) includes a plurality of teeth (15) having a substantially trapezoidal cross-sectional shape, said teeth (15) of said supporting plate (11) being extended radially and inwardly into said orifice of said supporting plate (11) for forming a plurality of slots (16) between said teeth (15) having a substantially trapezoidal cross-sectional shape, said teeth (15) of said supporting plate (11) include an addendum defined by the top surfaces of the teeth (15) and a dedendum defined by the bottoms of slots (16), wherein the dedendum defines an inner diameter (W) no less than the outer diameter (D) of said pinion (36) of said motor (30) for allowing said pinion (36) of said motor (30) to be engaged through said orifice (12) of said supporting plate (11), **in that** said protrusion (31) of said motor (30) includes an outer diameter (d) no greater than an inner diameter (a) defined by the addendum of said teeth (15) of said supporting plate (11) for allowing said protrusion (31) of said motor (30) to be engaged into said orifice (12) of said supporting plate (11) and engaged with said addendum of said teeth (15) of said supporting plate (11),
**in that** said motor (30) includes a mounting seat on its outer diameter at its forward end
and **in that** said supporting plate (11) includes a protrusion placed on said mounting seat.

2. The air compressor device as claimed in claim 1, wherein said motor (30) includes at least one retaining hole (33, 34) formed therein, and said supporting plate (11) includes at least one positioning projection (17, 18) extended outwardly therefrom and located beside said orifice of said supporting plate (11) and engaged into said at least one retaining hole (33, 34) of said motor (30) for anchoring said motor (30) to said supporting plate (11).

3. The air compressor device as claimed in claim 1, wherein said supporting plate (11) includes at least one engaging hole (14) engaged with a fastener (19) which is engaged with said motor (30).

## Patentansprüche

1. Luftkompressor, umfassend:
eine tragende Basis (10) mit einer tragenden Platte (11) und einem Zylindergehäuse (20), wobei das Zylindergehäuse (20) eine Kammer (21), die darin ausgebildet ist, und eine Auslassbuchse (50) umfasst, die sich von dem Zylindergehäuse (20) nach oben erstreckt, um Druckluft von der Kammer (21) des Zylindergehäuses (20) zu empfangen,
wobei die tragende Platte (11) einen Durchlass (12) und eine Öffnung (13) umfasst, die darin ausgebildet sind,
einen Kolben (25), der verschiebbar in der Kammer (21) des Zylindergehäuses (20) aufgenommen ist und eine Kolbenstange (27) aufweist, die sich von einem Kolbenkopf (26) erstreckt,
einen Schaft, der drehbar durch die Öffnung (13) der tragenden Platte (11) greift, ein Zahnrad (40), das an dem Schaft (41) befestigt ist und relativ zu der tragenden Platte (11) drehbar ist,
ein Exzenterelement (42), das an dem Zahnrad (40) angebracht ist und einen Exzenterzapfen (43) umfasst, der sich von dem Exzenterelement (42) erstreckt und an die Kolbenstange (27) gekoppelt ist, um den Kolbenkopf (26) des Kolbens zu betätigen und relativ zu dem Zylindergehäuse (20) in einer Pendelbewegung zu bewegen,
einen Motor (30), der einen sich nach vorne erstreckenden Vorsprung (31) umfasst, der in den Durchlass der tragenden Platte (11) greift und der eine Spindel umfasst, die sich drehbar aus dem Vorsprung (31) erstreckt und sich durch den Durchlass der tragenden Platte (11) erstreckt und der ein Getrieberad (36) umfasst, das an der Spindel (35) angebracht ist und mit dem Zahnrad (40) in Eingriff steht und damit verzahnt ist, um es dem Zahnrad (40) zu ermöglichen, von dem Motor (30) mit dem Getrieberad (36) angetrieben zu werden, und um es dem Kolbenkopf (26) und der Kolbenstange (27) zu ermöglichen, relativ zu dem Zylindergehäuse (20) in der Pendelbewegung durch das Exzenterelement (42) und den Exzenterzapfen (43) bewegt zu werden, wobei das Getrieberad (36) einen Außendurchmesser (D) umfasst, der größer als ein Außendurchmesser (d) des Vorsprungs (31) des Motors (30) ist,
**dadurch gekennzeichnet, dass**
die tragende Platte (11) eine Vielzahl an Zähnen (15) umfasst, die eine im Wesentlichen trapezförmige Querschnittsform aufweisen, wobei sich die Zähne (15) der tragenden Platte (11) radial und nach innen in den Durchlass der tragenden Platte (11) erstrecken, um eine Vielzahl an Schlitzen (16) zwischen den Zähnen (15) auszubilden, die eine im Wesentlichen trapezförmige Querschnittsform aufweisen, wobei die Zähne (15) der tragenden Platte (11) ein Addendum umfassen, das durch die oberen Oberflächen der Zähne (15) definiert ist und eine Zahnhöhe, die durch die Böden der Schlitze (16) definiert ist, wobei die Zahnhöhe einen Innendurchmesser (W) definiert, der nicht geringer als der Außendurchmesser (D) des Getrieberads (36) des Motors (30) ist, um es dem Getrieberad (36) des Motors (30) zu ermöglichen, durch den Durchlass (12) der tragenden Platte (11) zu greifen, und dadurch dass
der Vorsprung (31) des Motors (30) einen Außendurchmesser (d) umfasst, der nicht größer als ein Innendurchmesser (a) ist, der von dem Addendum der Zähne (15) der tragenden Platte (11) definiert ist, um es dem Vorsprung (31) des Motors (30) zu ermöglichen, in den Durchlass (12) der tragenden Platte (11) einzugreifen und mit dem Addendum der Zähne (15) der tragenden Platte (11) im Eingriff zu sein, und dadurch, dass
der Motor (30) einen Montagesitz an seinem Außendurchmesser an seinem vorderen Ende umfasst und dadurch, dass
die tragende Platte (11) einen Vorsprung beinhaltet, der an dem Montagesitz angeordnet ist.

2. Luftkompressor nach Anspruch 1, bei dem der Motor (30) zumindest ein Rückhalteloch (33, 34) umfasst, das darin ausgebildet ist, und wobei die tragende Platte (11) zumindest einen Positioniervorsprung (17, 18) umfasst, der sich davon nach außen erstreckt und neben dem Durchlass der tragenden Platte (11) angeordnet ist und mit dem zumindest einen Rückhalteloch (33, 34) des Motors (30) im Eingriff ist, um den Motor (30) an der tragenden Platte (11) zu verankern.

3. Luftkompressor nach Anspruch 1, bei dem die tragende Platte (11) zumindest ein Eingriffsloch (14) umfasst, das mit einem Befestigungselement (19) in Eingriff steht, das mit dem Motor (30) in Eingriff steht.

## Revendications

1. Dispositif de compresseur d'air comprenant:
une base de support (10) incluant une plaque de support (11) et un boîtier de cylindre (20), ledit boîtier de cylindre (20) incluant une chambre (21) formée dedans, et incluant un réceptacle de sortie (50) étendu vers le haut depuis ledit boîtier de cylindre (20) pour la réception d'un air sous pression provenant de ladite chambre (21) dudit boîtier de cylindre (20),
ladite plaque de support (11) incluant un orifice (12) et une ouverture (13) formée dedans,
un piston (25) reçu par coulissement dans ladite chambre (21) dudit boîtier de cylindre (20) et présentant une tige de piston (27) étendue depuis une tête de piston (26),
un arbre mis en prise de manière à pouvoir tourner au travers de ladite ouverture (13) de ladite plaque de support (11),
un engrenage (40) attaché audit arbre (41) et rotatif par rapport à ladite plaque de support (11),
un élément excentrique (42) attaché audit engrenage (40) et incluant une goupille excentrique (43) étendue depuis ledit élément excentrique (42) et couplée à ladite tige de piston (27) afin d'actionner et de déplacer ladite tête de piston (26) dudit piston par rapport audit boîtier de cylindre (20) dans une action de mouvement alternatif,
un moteur (30) incluant une saillie étendue vers l'avant (31) mise en prise dans ledit orifice de ladite plaque de support (11), et incluant une broche étendue de manière à pouvoir tourner hors de ladite saillie (31) et étendue au travers dudit orifice de ladite plaque de support (11), et incluant un pignon (36) attaché à ladite broche (35) et engrené et mis en prise avec ledit engrenage (40) pour permettre audit engrenage (40) d'être entraîné par ledit moteur (30) avec ledit pignon (36), et pour permettre à ladite tête de piston (26) et ladite tige de piston (27) d'être déplacées par rapport audit boîtier de cylindre (20) dans l'action de mouvement alternatif par ledit élément excentrique (42) et ladite goupille excentrique (43), et ledit pignon (36) incluant un diamètre extérieur (D) supérieur à un diamètre extérieur (d) de ladite saillie (31) dudit moteur (30), **caractérisé en ce que**
ladite plaque de support (11) inclut une pluralité de dents (15) présentant une forme de section transversale sensiblement trapézoïdale, lesdites dents (15) de ladite plaque de support (11) étant étendues radialement et vers l'intérieur dans ledit orifice de ladite plaque de support (11) pour la formation d'une pluralité de fentes (16) entre lesdites dents (15) présentant une forme de section transversale sensiblement trapézoïdale, lesdites dents (15) de ladite plaque de support (11) incluent une saillie définie par les surfaces supérieures des dents (15) et un creux défini par les fonds des fentes (16), dans lequel le creux définit un diamètre intérieur (W) qui n'est pas inférieur au diamètre extérieur (D) dudit pignon (36) dudit moteur (30) pour permettre audit pignon (36) dudit moteur (30) d'être mis en prise au travers dudit orifice (12) de ladite plaque de support (11), **en ce que** ladite saillie (31) dudit moteur (30) inclut un diamètre extérieur (d) qui n'est pas supérieur à un diamètre intérieur (a) défini par la saillie desdites dents (15) de ladite plaque de support (11) pour permettre à ladite saillie (31) dudit moteur (30) d'être mise en prise dans ledit orifice (12) de ladite plaque de support (11) et mise en prise avec ladite saillie desdites dents (15) de ladite plaque de support (11),
**en ce que** ledit moteur (30) inclut un siège de montage sur son diamètre extérieur à son extrémité avant
et **en ce que** ladite plaque de support (11) inclut une saillie placée sur ledit siège de montage.

2. Dispositif de compresseur d'air selon la revendication 1, dans lequel ledit moteur (30) inclut au moins un trou de retenue (33, 34) formé dedans, et ladite plaque de support (11) inclut au moins une saillie de positionnement (17, 18) étendue vers l'extérieur depuis celle-ci et située à côté dudit orifice de ladite plaque de support (11) et mise en prise dans ledit au moins un trou de retenue (33, 34) dudit moteur (30) pour l'ancrage dudit moteur (30) à ladite plaque de support (11).

3. Dispositif de compresseur d'air selon la revendication 1, dans lequel ladite plaque de support (11) inclut au moins un trou de mise en prise (14) mis en prise avec un élément de fixation (19) qui est mis en prise avec ledit moteur (30).
